# DEMANDE DE BREVET EUROPEEN

(11) **EP 2 960 500 A1**
(43) Date de publication de la demande: **30.12.2015**
(21) Numéro de dépôt: 15173214.6
(22) Date de dépôt: 22.06.2015
(51) Int. Cl.: F04B 17/03, F04D 13/06, F04B 53/00, F04D 29/043, H02K 5/128

(54) **ARBRE MÉTALLIQUE CYLINDRIQUE ET PARTIELLEMENT REVÊTU**

(30) Priorité: 20.06.2014 FR 1455706
(71) Demandeur: Wilo Salmson France, 78400 Chatou (FR)
(72) Inventeur: BOUILLY, Hervé, 53940 LE GENEST ST ISLE (FR); SANTOS, Mickaël, 53000 LAVAL (FR); BOUSSEAU, Jean-Michel, 53000 LAVAL (FR)
(74) Mandataire: Hirsch & Associés

(57) **Abrégé**

L'invention se rapporte à un arbre (10) métallique, cylindrique et monobloc destiné à être disposé au centre d'un rotor (6) d'un moteur électrique d'une pompe de circulation de fluide pour être entraîné en rotation, caractérisé en ce que la surface cylindrique de l'arbre présente
- une zone nue (12 ; 13), dite de soudage, et
- de chaque côté de la zone de soudage, une zone (14 ; 15), dite de friction, présentant un traitement qui est
- soit un dépôt physique en phase vapeur,
- soit un dépôt chimique en phase vapeur,
- soit une projection thermique,
- soit une électrodéposition,
- soit un traitement anodique, céramique ou chromatique.

## Description

L'invention se rapporte à une arbre métallique, cylindrique, monobloc partiellement revêtu, à deux procédés de traitement de surface d'un tel arbre, à une enveloppe d'encapsulation d'un aimant tubulaire, à un procédé d'assemblage d'une telle enveloppe, à un rotor noyé et à une pompe de circulation de fluide comportant un tel rotor.

Les pompes de circulation de fluide sont utilisées en génie climatique, notamment dans les installations de chauffage à eau chaude, dans le bouclage des circuits de distribution d'eau chaude sanitaire, ainsi que dans les installations à énergie renouvelable (solaire, pompes à chaleur, air conditionné ...).

De telles pompes sont munies d'un moteur électrique comportant un stator et un rotor entraîné en rotation par ledit stator. Le rotor comporte un arbre autour duquel sont disposés un aimant et, de chaque côté dudit aimant, un coussinet de friction. Puisque le matériau utilisé pour réaliser l'aimant est généralement hydrophobe, il convient de l'encapsuler de façon étanche. L'encapsulation consiste le plus souvent à réaliser un soudage sur l'arbre d'une enveloppe métallique, de préférence en acier inoxydable, entourant partiellement l'aimant. On entend par « entourant partiellement l'aimant » le fait que l'enveloppe ne recouvre pas l'aimant du côté de l'arbre.

Habituellement, l'arbre subit un traitement de surface pour assurer une certaine qualité de friction et de dureté, i.e. un glissement correct et durable, entre ledit arbre et les coussinets l'entourant. Le plus souvent, ce traitement de surface est un traitement thermique de type trempe ou trempage dont les caractéristiques de friction et de dureté peuvent engendrer, à moyen terme, des problèmes d'usure de l'arbre et/ou des coussinets.

Mais, dans l'état de la technique, les traitements de surface appliqués aux arbres de rotors noyés doivent être compatibles avec le soudage réalisé pour l'encapsulation. Cette contrainte limite le choix du traitement de surface à appliquer à l'arbre et empêche donc d'optimiser la qualité de friction entre ledit arbre et les coussinets l'entourant. En effet, un traitement de surface de type anodique, céramique ou chromatique résoudrait le problème d'usure précédemment évoqué mais détériorerait excessivement la soudure entre l'enveloppe et l'arbre et donc l'étanchéité de l'encapsulation nécessaire au bon fonctionnement du rotor noyé.

Il existe donc un besoin pour améliorer la qualité de dureté de l'arbre et de friction entre l'arbre et les coussinets tout en garantissant une robustesse de la soudure entre l'enveloppe d'encapsulation et ledit arbre.

Dans l'invention, pour résoudre ce problème technique, on distingue sur l'arbre une zone de soudage ne présentant, in fine, quasiment aucun, voire aucun, traitement de surface et des zones de friction présentant un traitement de surface optimal.

L'invention vise à résoudre ce problème technique en fournissant un arbre dont la surface cylindrique n'est, in fine, que partiellement traitée de manière à permettre à la fois une friction idéale entre l'arbre et les coussinets et une fixation étanche par soudage de l'enveloppe sur ledit arbre.

A cette fin, la présente invention propose un arbre métallique, cylindrique et monobloc destiné à être disposé au centre d'un rotor d'un moteur électrique d'une pompe de circulation de fluide pour être entraîné en rotation, caractérisé en ce que la surface cylindrique de l'arbre présente
- une zone nue, dite de soudage, et
- de chaque côté de la zone de soudage, une zone traitée, dite de friction.

Selon des caractéristiques particulières, le traitement subi par la surface de l'arbre, au niveau de sa zone de friction, est de type anodique, céramique ou chromatique.

Selon des caractéristiques particulières, la zone de soudage comporte deux sous-zones distinctes.

L'invention a également pour objet un premier procédé de traitement de surface d'un arbre tel que décrit précédemment, ledit procédé comprenant
- application d'un revêtement sur toute la surface cylindrique de l'arbre, puis
- ablation dudit revêtement sur la zone de soudage.

L'invention a également pour objet un deuxième procédé de traitement de surface d'un arbre tel que décrit précédemment, ledit procédé comprenant
- enfilage d'une bague de protection autour de l'arbre, sur la zone de soudage ; puis
- application d'un revêtement sur toute la surface cylindrique de l'arbre non-couverte par ladite bague de protection ; puis
- retrait de ladite bague de protection.

L'invention a également pour objet une enveloppe d'encapsulation d'un aimant tubulaire, ladite enveloppe comprenant
- une chemise tubulaire,
- au sein et aux extrémités de ladite chemise, deux flans annulaires,
- au sein desdits flans annulaires, un arbre tel que décrit précédemment, et
- ledit aimant tubulaire, disposé au sein d'un espace formé par ladite chemise, lesdits flans et ledit arbre.

Selon des caractéristiques particulières,
- la chemise, les flans annulaires et l'arbre sont soudés entre eux de manière étanche,
- lesdits flans annulaires sont soudés sur la zone de soudage.

L'invention a également pour objet un procédé d'assemblage d'une enveloppe d'encapsulation telle que décrite précédemment, ledit procédé comportant des étapes de
- mise en place de l'aimant tubulaire au sein de la chemise tubulaire,
- soudage des flans annulaires au sein et aux extrémités de ladite chemise, et
- soudage desdits flans sur la zone de soudage de l'arbre.

L'invention a également pour objet un rotor noyé destiné à être disposé au sein d'une pompe de circulation, ledit rotor comportant
- un aimant tubulaire,
- un arbre tel que décrit précédemment, et
- une enveloppe d'encapsulation telle que décrite précédemment.

L'invention a enfin pour objet une pompe de circulation de fluide comprenant un moteur électrique comportant un stator et un rotor noyé tel que décrit précédemment.

Grâce à ces dispositions, d'une part, les soudures entre l'arbre et l'enveloppe d'encapsulation sont étanches et présentent une longévité maximale et, d'autre part, la friction entre l'arbre et les coussinets est silencieuse et durable.

D'autres caractéristiques et avantages de l'invention apparaîtront à la lecture de la description qui suit de modes de réalisation préférés de l'invention, donnée à titre d'exemple et en référence aux dessins annexés, qui montrent :
- figure 1, une vue d'ensemble, en coupe axiale d'un rotor noyé muni d'un premier exemple d'arbre selon l'invention ;
- figure 2, une vue rapprochée, en coupe axiale, d'un deuxième exemple d'arbre selon l'invention ;
- figure 3, une vue rapprochée, en coupe axiale, d'un troisième exemple d'arbre selon l'invention.

Dans la suite de la description, les éléments identiques ou de fonction identique portent le même signe de référence. À fin de concision de la présente description, les éléments identiques aux différents exemples ne sont pas décrits en regard de chacun de ces exemples. En d'autres termes, seules les différences entre les différents exemples sont décrites de manière détaillée, les éléments communs étant décrits en regard d'un seul exemple.

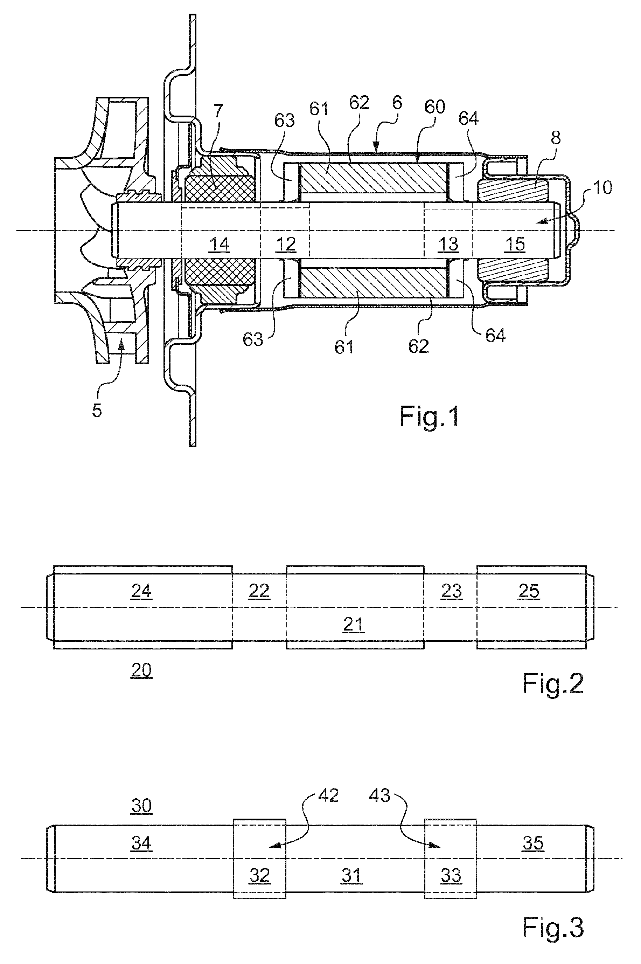

La figure 1 montre un rotor noyé 6 d'un moteur électrique d'une pompe de circulation de fluide. Au centre du rotor 6 est installé un premier exemple d'arbre 10 selon l'invention. Une turbine ou roue centrifuge 5 est montée sur une extrémité émergeante de l'arbre 10 et destinée à être disposée dans une zone de refoulement de fluide.

Le rotor 6 comporte, autour de l'arbre 10, une enveloppe d'encapsulation 60 et, de chaque côté de ladite enveloppe, un coussinet cylindrique 7 et 8 entourant l'arbre 10.

Puisque les coussinets cylindriques 7 et 8 sont fixes mais en contact avec des zones de friction14 et 15 respectivement de l'arbre 10 qui est destiné à pivoter sur lui-même lorsque le moteur électrique fonctionne, l'invention prévoit de traiter les dites zones de friction pour diminuer les forces de frottement, i.e. améliorer la qualité de friction, entre lesdites zones de friction de la surface cylindrique de l'arbre 10 et les coussinets cylindriques 7 et 8. Le but du traitement localisé est également de renforcer la dureté de l'arbre 10 dans les zones de friction de façon à améliorer la robustesse de la pivoterie en milieu abrasif.

Typiquement, le traitement de surface des zones de friction 14 et 15 est un dépôt physique en phase vapeur (PVD en langue anglaise), un dépôt chimique en phase vapeur (CVD en langue anglaise), une projection thermique, une électrodéposition, ou encore un traitement anodique, céramique ou chromatique.

Le DLC (Diamond Like Carbon en langue anglaise) et le CrN (Chromium Nitrite en langue anglaise) sont des exemples préférés de revêtements utilisés, en pulvérisation cathodique, pour un traitement de surface par dépôt physique en phase vapeur.

L'enveloppe d'encapsulation 60 comprend une chemise tubulaire 62, deux flans annulaires 63 et 64, l'arbre 10, ainsi qu'un aimant tubulaire 61.

Les deux flans annulaires 63 et 64 sont disposés au sein et aux extrémités de la chemise tubulaire 62. L'arbre 10 est disposé au sein des flans annulaires 63 et 64. L'aimant tubulaire 61 est disposé au sein d'un espace formé par la chemise tubulaire 62, les flans annulaires 63 et 64 et l'arbre 10.

La chemise 62, les flans annulaires 63 et 64 et l'arbre 10 sont soudés entre eux de manière étanche pour encapsuler l'aimant 61.

Les flans annulaires 63 et 64 sont respectivement soudés sur des sous-zones de soudage nues 12 et 13 de l'arbre 10. On entend par sous-zones de soudage nues le fait que lesdites sous-zones ne présentant quasiment aucun, voire aucun, traitement de surface de manière à assurer un soudage et une étanchéité optimaux, par opposition aux zones de soudage traitées 14 et 15 décrites précédemment.

Le procédé d'assemblage de l'enveloppe d'encapsulation 60 comporte donc les étapes de
- mise en place de l'aimant tubulaire 61 au sein de la chemise tubulaire 62,
- soudage des flans annulaires 63 et 64 au sein et aux extrémités de ladite chemise, et
- soudage desdits flans sur les sous-zones de soudage 12 et 13 de l'arbre 10.

La figure 2 montre un deuxième exemple d'arbre 20 selon l'invention. L'arbre 20 comporte deux sous-zones de soudage nues 22 et 23, entre lesdites sous-zones, une zone traitée 21 et, de chaque côté desdites sous-zones, deux zones traitées 24 et 25.

Le procédé de traitement de surface aboutissant à l'arbre 20 selon l'invention comprend des étapes d'application d'un revêtement sur toute la surface cylindrique dudit arbre et d'ablation dudit revêtement sur les sous-zones de soudage 22 et 23 qui redeviennent nues de ce fait.

De préférence, l'ablation du revêtement sur les sous-zones de soudage 22 et 23 à épargner est réalisée au moyen d'un faisceau laser.

Dans une variante non représentée, le revêtement de la zone traitée 21 est également supprimé. Dans ce cas, l'arbre 20 comporte une seule zone nue.

La figure 3 montre un troisième exemple d'arbre 30 selon l'invention avant application du revêtement.

Deux bagues de protection 42 et 43 ont été enfilées autour de l'arbre 30, sur les sous-zones de soudage 32 et 33 de manière à pouvoir appliquer ensuite le revêtement sur toute la surface cylindrique de l'arbre non-couverte par lesdites bagues de protection, c'est-à-dire entre lesdites bagues, sur une zone 31 et, de chaque côté desdites bagues, sur deux zones de friction 34 et 35.

Une fois le revêtement appliqué sur l'arbre 20, les bagues de protection 42 et 43 peuvent être retirées.

Dans une variante non représentée, une unique bague de protection recouvrant la zone 31 et les sous-zones de soudage 32 et 33 est enfilée autour de l'arbre 30. Dans ce cas, l'arbre 30 comporte une seule zone nue.

Plus généralement, le fait que les zones de la surface cylindrique de l'arbre selon l'invention qui ne sont ni des zones de friction, ni des zones de soudage, soient traitées ou non n'a aucune importance. Par exemple, l'extrémité avant, i.e. du côté de la roue centrifuge, de l'arbre selon l'invention est utilisée pour maintenir l'arbre pendant le traitement de surface et n'est donc, de ce fait pas traitée.

Bien entendu, la présente invention n'est pas limitée aux exemples et au mode de réalisation décrits et représentés, mais elle est susceptible de nombreuses variantes accessibles à l'homme de l'art.

## Revendications

1. Arbre (10 ; 20 ; 30) métallique, cylindrique et monobloc destiné à être disposé au centre d'un rotor (6) d'un moteur électrique d'une pompe de circulation de fluide pour être entraîné en rotation, **caractérisé en ce que** la surface cylindrique de l'arbre présente
- une zone nue (12 ; 13 ; 22 ; 23 ; 32 ; 33), dite de soudage, et
- de chaque côté de la zone de soudage, une zone (14 ; 15 ; 24 ; 25 ; 34 ; 35), dite de friction, présentant un traitement qui est
- soit un dépôt physique en phase vapeur,
- soit un dépôt chimique en phase vapeur,
- soit une projection thermique,
- soit une électrodéposition,
- soit un traitement anodique, céramique ou chromatique.

2. Arbre (10 ; 20 ; 30) selon la revendication 1, **caractérisé en ce que**, dans le cas d'un traitement de sa surface par dépôt physique en phase vapeur, un revêtement en DLC ou un revêtement en CrN sont utilisés, en pulvérisation cathodique.

3. Arbre (10 ; 20 ; 30) selon l'une des revendications 1 ou 2, **caractérisé en ce que** la zone de soudage comporte deux sous-zones distinctes (12 ; 13 ; 22 ; 23 ; 32 ; 33).

4. Procédé de traitement de surface d'un arbre (10 ; 20) selon l'une des revendications 1 à 3, ledit procédé comprenant
- application d'un revêtement sur toute la surface cylindrique de l'arbre ;
- ablation dudit revêtement sur la zone de soudage (12 ; 13 ; 22 ; 23).

5. Procédé de traitement de surface d'un arbre (10 ; 30) selon l'une des revendications 1 à 3, ledit procédé comprenant
- enfilage d'une bague de protection (42 ; 43) autour de l'arbre, sur la zone de soudage (12 ; 13 ; 32 ; 33) ; puis
- application d'un revêtement sur toute la surface cylindrique de l'arbre non-couverte par ladite bague de protection ; puis
- retrait de ladite bague de protection.

6. Enveloppe d'encapsulation (60) d'un aimant tubulaire (61), ladite enveloppe comprenant
- une chemise tubulaire (62),
- au sein et aux extrémités de ladite chemise, deux flans annulaires (63 ; 64),
- au sein desdits flans annulaires, un arbre (10 ; 20 ; 30) selon l'une quelconque des revendications 1 à 3, et
- ledit aimant tubulaire, disposé au sein d'un espace formé par ladite chemise, lesdits flans et ledit arbre.

7. Enveloppe d'encapsulation (60) selon la revendication 6, dans laquelle,
- la chemise (62), les flans annulaires (63 ; 64) et l'arbre (10 ; 20 ; 30) sont soudés entre eux de manière étanche,
- lesdits flans annulaires sont soudés sur la zone de soudage (12 ; 13 ; 22 ; 23 ; 32 ; 33).

8. Procédé d'assemblage d'une enveloppe d'encapsulation selon l'une quelconque des revendications 5 à 6, ledit procédé comportant des étapes de
- mise en place de l'aimant tubulaire (61) au sein de la chemise tubulaire (62),
- soudage des flans annulaires (63 ; 64) au sein et aux extrémités de ladite chemise, et
- soudage desdits flans sur la zone de soudage (12 ; 13 ; 22 ; 23 ; 32 ; 33) de l'arbre (10 ; 20 ; 30).

9. Rotor noyé (6) destiné à être disposé au sein d'une pompe de circulation, ledit rotor comportant
- un aimant tubulaire (61),
- un arbre (10 ; 20 ; 30) selon l'une quelconque des revendications 1 à 3, et
- une enveloppe d'encapsulation (60) selon l'une quelconque des revendications 6 à 7.

10. Pompe de circulation de fluide comprenant un moteur électrique comportant un stator et un rotor noyé (6) selon la revendication 9.
